# EUROPEAN PATENT SPECIFICATION

(11) **EP 2 566 232 B1**
(45) Date of publication and mention of the grant of the patent: **20.07.2016**
(21) Application number: 11775133.9
(22) Date of filing: 28.04.2011
(51) Int. Cl.: H04W 24/10, H04W 72/10, H04W 24/00

(54) **METHOD, MOBILE STATION AND RADIO BASE STATION FOR THE CONFIGURATION AND REPORTING OF MEASUREMENTS FOR THE MIMIMIZATION OF DRIVE TESTS, MDT**
VERFAHREN, MOBILSTATIONSVORRICHTUNG UND FUNKBASISSTATIONSVORRICHTUNG FÜR DIE KONFIGURATION UND ÜBERTRAGUNG VON MESSBERICHTEN ZUR MINIMIERUNG VON MESSFAHRTEN
PROCÉDÉ, STATION MOBILE ET STATION DE BASE RADIO POUR LA CONFIGURATION ET L'ENVOI DE RAPPORTS DE MESURES POUR LA MINIMISATION DE TESTS DE COUVERTURE RADIO

(30) Priority: 30.04.2010 JP 2010106006
(43) Date of publication of application: 06.03.2013
(73) Proprietor: NTT DOCOMO, INC., Chiyoda-ku Tokyo 100-6150 (JP)
(72) Inventor: IWAMURA, Mikio, Tokyo 100-6150 (JP); HAPSARI, Wuri Andarmawanti, Tokyo 100-6150 (JP); UMESH, Anil, Tokyo 100-6150 (JP)
(74) Representative: Hoffmann Eitle
(86) International application number: PCT/JP2011/060418
(87) International publication number: WO 2011/136352

(56) References cited:
- JP-A- 2008 199 223
- CATT: "Consideration on Priority of MDT Report", 3GPP DRAFT; R2-100074 CONSIDERATION ON PRIORITY OF MDT REPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 11 January 2010 (2010-01-11), XP050420809, [retrieved on 2010-01-11]
- NOKIA CORPORATION ET AL: "MDT architecture for connected mode reporting", 3GPP DRAFT; R2-100247, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20100222, 16 February 2010 (2010-02-16), XP050421728, [retrieved on 2010-02-16]
- "3rd Generation Partnership Project; Technical Specification Group Radio Access Network; Evolved Universal Terrestrial Radio Access (E-UTRA); Radio Resource Control (RRC); Protocol specification (Release 9)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 21 April 2010 (2010-04-21), pages 1-236, XP050402560, [retrieved on 2010-04-21]

## Description

### [Technical Field]

The present invention relates to a mobile communication method, a mobile station, and a radio base station.

### [Background Art]

At the present time, in 3GPP, "MDT (Minimization of Drive Tests)" is discussed. According to the MDT, a network collects measurement results of a radio quality from a mobile station UE, thereby minimizing the necessity of radio wave measurement conventionally performed by an operator.

Furthermore, the MDT includes "Logged MDT" and "Immediate MDT".

In the "Logged MDT", when the measurement results of a radio quality are stored as logs and a predetermined amount of logs are collected, the mobile station UE is configured to collectively report the logs to the network.

In the "Immediate MDT", the mobile station UE is configured to immediately report the measurement results of a radio quality to the network whenever a trigger is generated.

As a trigger of the "Immediate MDT", for example, an event trigger called "Serving<thresh (corresponding to Event-A2)", "Periodical" serving as a periodical trigger, "detection of RLF (Radio Link Failure)", and the like are considered.

As the "Immediate MDT", basically, diverting "MeasConfig" or "MeasReport" of a conventional LTE (Long Term Evolution) Release-8/9 scheme is considered.

Furthermore, the "MeasConfig" or the "MeasReport" of the LTE Release-8/9 scheme is basically designed to perform a measurement process and a measurement report of a serving cell or a neighboring cell for the purpose of a mobility support.

The "MeasConfig" is used to perform setting for a measurement process to be performed by the mobile station UE for the mobility support, or transmission of the "MeasReport". The "MeasConfig" may include one or a plurality of "ReportConfig", "MeasObject", or "MeasId".

The "ReportConfig" is used to set a condition to transmit the "MeasReport" from the mobile station UE to a radio base station eNB.

For example, according to a condition defined in Event A3, when a measurement result of a radio quality of a neighboring cell is improved by an offset value or more than a measurement result of a radio quality of a current serving cell, the "MeasReport" is transmitted.

Furthermore, according to a condition defined in Event A4, when a measurement result of a radio quality of a neighboring cell is more than a predetermined threshold value, the "MeasReport" is transmitted.

Furthermore, according to a condition defined in Event A2, when a measurement result of a radio quality of a current serving cell is equal to or less than a predetermined threshold value, the "MeasReport" is transmitted.

Furthermore, according to a condition defined in the "Periodical", a measurement result of a radio quality of a serving cell or a neighboring cell is reported by the "MeasReport" with a predetermined reporting periodicity.

The offset value, the predetermined threshold value, the predetermined reporting periodicity, the number of reports, the type of the condition and the like are set by the "ReportConfig".

Meanwhile, the "MeasObject" is used to set RAT (Radio Access Technology) or a frequency to be measured by the mobile station. The "MeasObject" includes an offset value to be applied to a measurement result of each cell, a list of cells that should be excluded from a measurement target, and the like.

The "MeasId" is used to link single "ReportConfig" to single "MeasObject", and the mobile station UE measures only a measurement target designated by the "MeasObject" to which the "MeasId" has been linked, and transmits to the radio base station eNB "MeasReport" including a measurement result only when a condition designated by the "ReportConfig" linked to the "MeasObject" is satisfied by the "MeasId.

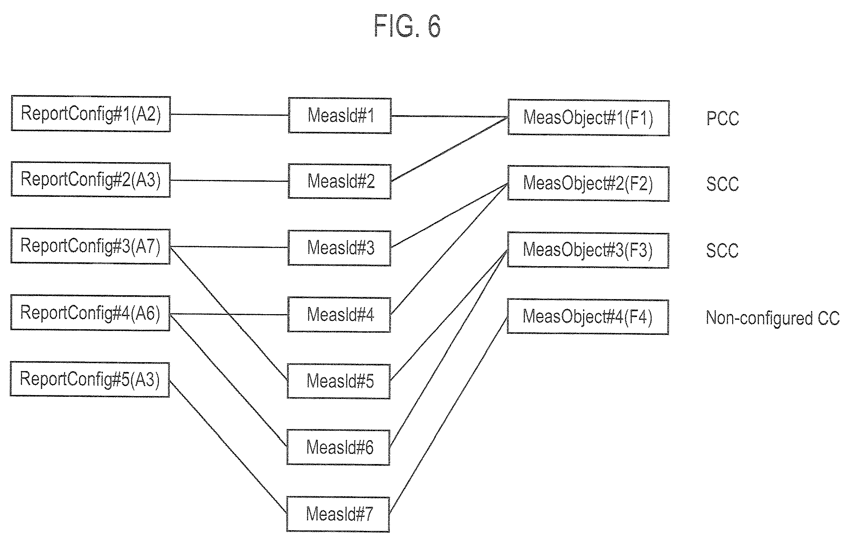

Fig. 6 shows a relation among the "ReportConfig", the "MeasObject", and the "MeasId".

In the LTE Release-8/9 scheme, all C-plane signaling or U-plane data is transmitted through a radio bearer.

As a radio bearer for the C-plane signaling, two SRBs (Signalling Radio Bearer), that is, SRB1 and SRB2 are set.

The SRB1 is used for transmission of RRC (Radio Resource Control) signaling, and some NAS (Non Access Stratum) message transmitted after being connected to an RRC message at the time of initial connection, and the SRB2 is used for transmission of remaining all NAS signaling.

Furthermore, by using DRB (Data Radio Beare: radio bearer for data) set in each QoS, the U-plane data is transmitted.

The priority of the SRB1 is set to be the highest, and the priority of the SRB2 is set to be the next highest. Furthermore, the priority of the DRB is determined according to QoS, exactly, QCI (QoS Class Indicator) notified from a mobile management node MME at the time of setting of a radio bearer.

### [Citation List]

### [Patent Literature]

[PTL 1] Japanese Patent Application Laid-Open No. 2008-199223

### [Summary of Invention]

### [Technical Problem]

Furthermore, the applicant found the following problems in the aforementioned mobile communication system.

In the mobile communication system, when performing the MDT, particularly, the "Immediate MDT", the number of transmissions of the "MeasReport" is increased, and thus there is a problem that the consumption amount of a radio resource or a network load is increased.

In the LTE Release-8/9 scheme, the "MeasReport" is defined to be transmitted through the SRB1.

However, basically, the MDT is performed when the network side collects a radio quality, and originally has a priority lower than the C-plane signaling transmitted through the SRB1/SRB2. Moreover, there is no problem even through the MDT has a priority lower than almost all U-plane data.

Thus, when "MDT MeasReport" is transmitted through the SRB1, the efficiency is low. Particularly, when the "MDT MeasReport" is frequently transmitted, a radio resource is preferentially consumed, and thus there is a problem that the transmission efficiency or capacity of the U-plane data is reduced.

In this regard, Patent Literature 1 proposes that SRB3 should be newly defined for the MDT.

However, Patent Literature 1 does not disclose a detailed method of setting or using the SRB3.

Furthermore, the SRB1 and the SRB2 are defined to be set up at the time of initial connection. However, the SRB3 is not necessary in normal communication, and thus is set up only when the MDT is performed.

However, Patent Literature 1 does not disclose a timing of setting the SRB3, or a method thereof.

Therefore, the present invention has been achieved in view of the above-described problems, and an object thereof is to provide a mobile communication method, a mobile station, and a radio base station, by which it is possible to perform MDT without wasting a radio resource in SRB1 and SRB2.

Document "Consideration on Priority of MDT Report", 3GPP DRAFT, R2-100074, RAN WG2, Valencia Spain, 20100118, 11 January 2010 relates to the priority of MDT reports. Here, SRB1 is for RRC messages (which may include a piggybacked NAS message) as well as for NAS messages prior to the establishment of SRB2, all using DCCH logical channel. A new SRB is defined to carry the MDT report message. In LTE, SRB2 has lower priority than SRB1, and SRB2 is restricted to carry NAS messages. It is reasonable to transmit MDT report message using lower priority than either current RRC messages or NAS messages. Hence, the simplest way is to define a new SRB, which has the lowest transmission priority

Document "MDT architecture for connected mode reporting", 3GPP DRAFT, R2-100247, RAN WG2, San Francisco, USA, 20100222, 16 February 2010 relates to an MDT architecture for connected mode reporting. Here, MDT measurements can be configured using existing RRC signaling and messages.

### [Solution to Problem]

A first characteristic of the present embodiment is summarized as a mobile communication method according to claim 1.

A second characteristic of the present embodiment is summarized as a mobile station according to claim 2.

A third characteristic of the present embodiment is summarized as a radio base station according to claim 3.

### [Advantageous Effects of Invention]

As described above, according to the present invention, it is possible to provide a mobile communication method, a mobile station, and a radio base station, by which it is possible to perform MDT without wasting a radio resource in SRB1 and SRB2.

### [Brief Description of Drawings]

[Fig. 1] Fig. 1 is a diagram showing the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a diagram illustrating an example of a format of "ReportConfig" transmitted by the radio base station according to the first embodiment of the present invention.
[Fig. 4] Fig. 4 is a functional block diagram of a mobile station according to the first embodiment of the present invention.
[Fig. 5] Fig. 5 is a sequence diagram illustrating an operation of the mobile communication system according to the first embodiment of the present invention.
[Fig. 6] Fig. 6 is a diagram for explaining a measurement process in a conventional mobile communication system.

### [Description of Embodiments]

### (Mobile communication system according to first embodiment of the present invention)

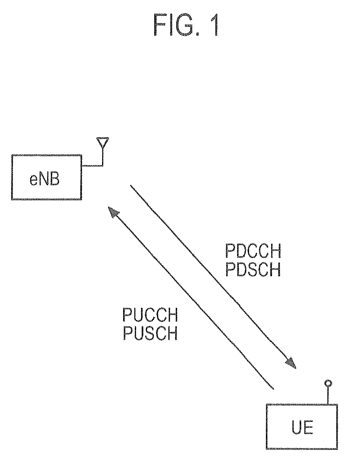

With reference to Fig. 1 to Fig. 5, the configuration of a mobile communication system according to a first embodiment of the present invention will be described.

As illustrated in Fig. 1, in the mobile communication system according to the present embodiment, a mobile station UE is configured to transmit an uplink data signal through PUSCH (Physical Uplink Shared Channel, an uplink shared channel), and to transmit an uplink control signal through PUCCH (Physical Uplink Control Channel, an uplink control channel).

Furthermore, in the mobile communication system according to the present embodiment, a radio base station eNB is configured to transmit a downlink data signal through PDSCH (Physical Downlink Shared Channel, a downlink shared channel), and to transmit a downlink control signal through PDCCH (Physical Downlink Control Channel, a downlink control channel).

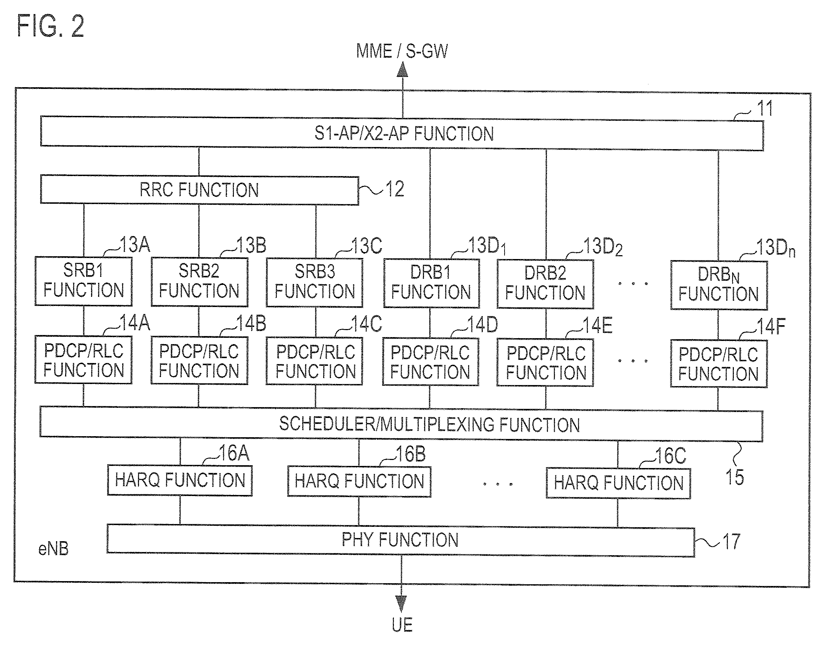

As illustrated in Fig. 2, the radio base station eNB includes, for each mobile station UE, an S1-AP/X2-AP function 11, an RRC function 12, a SRB1 function 13A, a SRB2 function 13B, a SRB3 function 13C, a DRB1 function 13D1 to a DRBn function 13Dn, PDCP/RLC functions 14A to 14F, a Scheduler/Multiplexing function 15, HARQ functions 16A to 16C, and a PHY function 17.

The S1-AP/X2-AP function 11 is configured to perform a process in an S1-AP/X2-AP layer, and the RRC function 12 is configured to perform a process in an RRC layer.

Furthermore, the SRB1 function 13A is configured to perform a process related to SRB1, the SRB2 function 13B is configured to perform a process related to SRB2, the SRB3 function 13C is configured to perform a process related to SRB3, and the DRB1 function 13D1 to the DRBn function 13Dn are configured to perform a process related to DRB1 to DRB3.

The PDCP (Packet Data Convergence Protocol)/RLC (Radio Link Control) functions 14A to 14F are configured to perform a process in a PDCP/RLC layer.

The Scheduler/Multiplexing function 15 is configured to perform a scheduling process and a multiplexing process, the HARQ functions 16A to 16C are configured to perform a retransmission control process based on HARQ, and the PHY function 17 is configured to perform a process in a physical layer.

Furthermore, the SRB1 function 13A is configured to transmit, by using the SRB1, "MeasConfig" in which "MeasObject" and "ReportConfig" are included.

On the other hand, the SRB3 function 13C is configured to transmit, by using the SRB3, "MDT MeasConfig" including the "MeasObject" and the "ReportConfig".

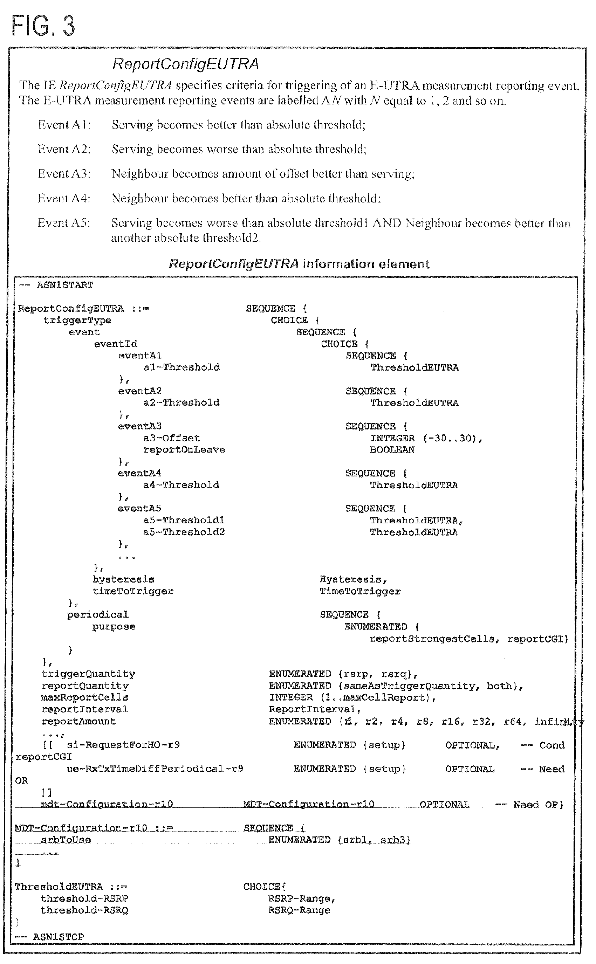

For example, as illustrated in Fig. 3, it is possible for the SRB3 function 13C to set "srb3" in "srbToUse" in an information element "mdt-Configuration-r10" in the "ReportConfig" included in the "MDT MeasConfig", and thus to instruct the radio base station eNB to transmit, by using the SRB3, "MDT MeasReport" to the mobile station UE.

Alternatively, the SRB3 function 13C may newly define and use another information element in the "ReportConfig", for example, an "event trigger" for MDT, and thus instruct the radio base station eNB to transmit, by using the SRB3, the "MDT MeasReport" to the mobile station UE.

In addition, the SRB1 function 13A may be configured to transmit, by using the SRB1, the "MDT MeasConfig" including the "MeasObject" and the "ReportConfig".

Furthermore, the SRB1 function 13A may be configured to receive, by using the SRB1 designated by the "ReportConfig", "MeasReport" in which a measurement result in a measurement target designated by the "MeasObject" is included, from the mobile station UE.

On the other hand, the SRB3 function 13C is configured to receive from the mobile station UE, by using the SRB3 designated by the "ReportConfig", the "MDT MeasReport" in which the measurement result in the measurement target designated by the "MeasObject" is included.

In addition, the SRB1 function 13A may be configured to receive, by using the SRB1 designated by the "ReportConfig", the "MDT MeasReport" in which the measurement result in the measurement target designated by the "MeasObject" is included, from the mobile station UE.

Furthermore, the SRB1 function 13A is configured to set up, by using the SRB1, the SRB3 between the radio base station eNB and the mobile station UE.

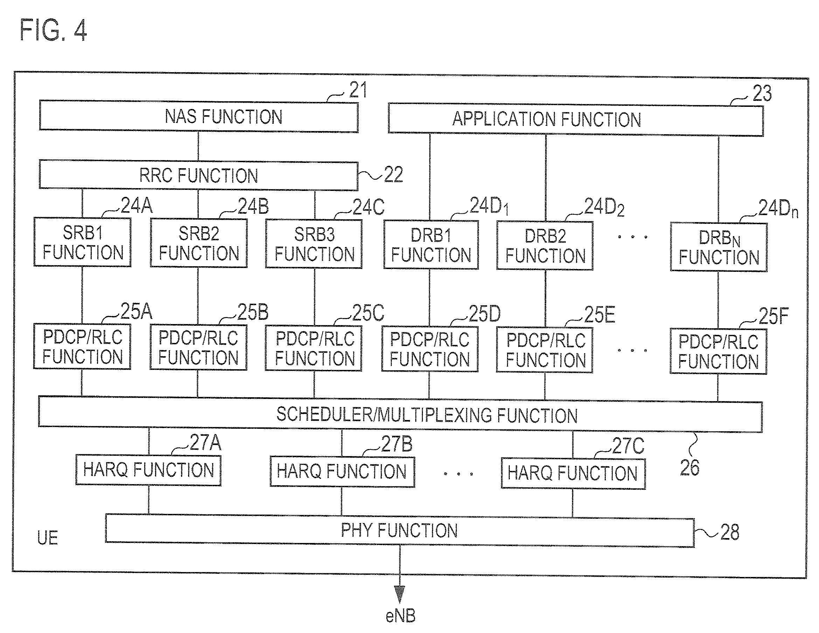

As illustrated in Fig. 4, the mobile station UE includes a NAS function 21, an RRC function 22, an Application function 23, a SRB1 function 24A, a SRB2 function 24B, a SRB3 function 24C, a DRB1 function 24D1 to a DRBn function 24Dn, PDCP/RLC functions 25A to 25F, a Scheduler/Multiplexing function 26, HARQ functions 27A to 27C, and a PHY function 28.

The NAS function 21 is configured to perform a process in a NAS layer, the RRC function 22 is configured to perform a process in an RRC layer, and the Application function 23 is configured to perform a process of in an Application layer.

Furthermore, the SRB1 function 24A is configured to perform a process related to SRB1, the SRB2 function 24B is configured to perform a process related to SRB2, the SRB3 function 24C is configured to perform a process related to SRB3, and the DRB1 function 24D1 to the DRBn function 24Dn are configured to perform a process related to DRB1 to DRB3.

The PDCP/RLC functions 25A to 25F are configured to perform a process in a PDCP/RLC layer, the Scheduler/Multiplexing function 26 is configured to perform a scheduling process and a multiplexing process, the HARQ functions 27A to 27C are configured to perform a retransmission control process based on HARQ, and the PHY function 28 is configured to perform a process in a physical layer.

Furthermore, the SRB1 function 24Ais configured to receive, by using the SRB1, the "MeasConfig" including the "MeasObject" and the "ReportConfig".

On the other hand, the SRB3 function 24C is configured to receive, by using the SRB3, the "MDT MeasConfig" including the "MeasObject" and the "ReportConfig".

In addition, the SRB1 function 24A may be configured to receive, by using the SRB1, the "MDT MeasConfig" including the "MeasObject" and the "ReportConfig".

Furthermore, the SRB1 function 24A is configured to transmit to the radio base station eNB, by using the SRB1 designated by the "ReportConfig", the "MeasReport" in which the measurement result in the measurement target designated by the "MeasObject" is included.

On the other hand, the SRB3 function 24C is configured to transmit to the radio base station eNB, by using the SRB3 designated by the "ReportConfig", the "MDT MeasReport" in which the measurement result in the measurement target designated by the "MeasObject" is included.

For example, as illustrated in Fig. 3, when the "srb3" is set in the "srbToUse" in the information element "mdt-Configuration-r10" in the "ReportConfig" included in the "MDT MeasConfig", the SRB3 function 24C is configured to transmit the "MDT MeasReport", by using the SRB3.

Alternatively, when another information element in the "ReportConfig", for example, an "event trigger" for MDT is set, the SRB3 function 24C may be configured to transmit the "MDT MeasReport", by using the SRB3.

In addition, the SRB1 function 24A may be configured to transmit to the radio base station eNB, by using the SRB1 designated by the "ReportConfig", the "MDT MeasReport" in which the measurement result in the measurement target designated by the "MeasObject" is included.

Furthermore, the SRB1 function 24A is configured to set up, by using the SRB1, the SRB3 between the mobile station UE and the radio base station eNB.

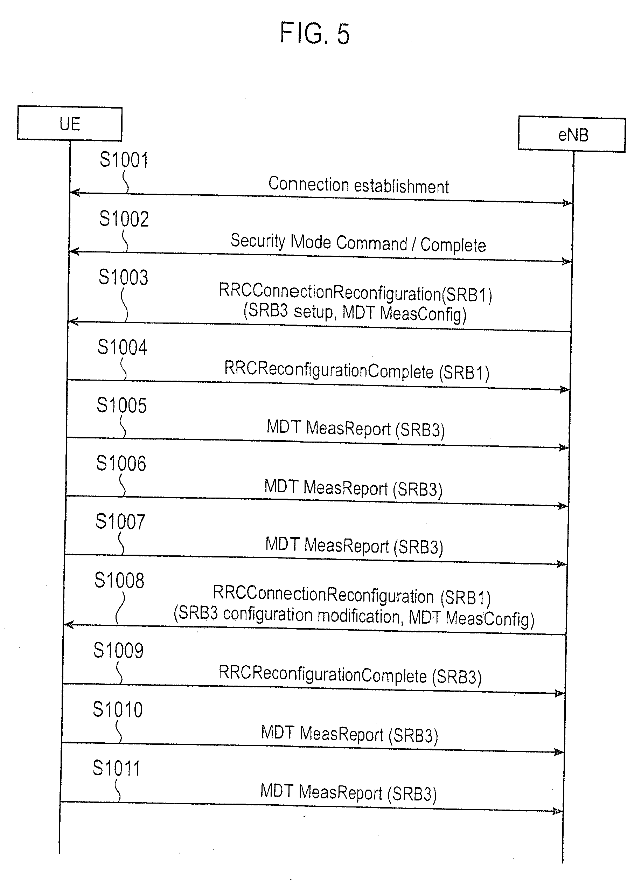

With reference to Fig. 5, the operation of the mobile communication system according to the present embodiment will be explained, below.

As illustrated in Fig. 5, an RRC connection is set up between the radio base station eNB and the mobile station UE in step S1001, and a SMC (Security Mode Command/Complete) process is performed between the radio base station eNB and the mobile station UE in step S1002.

Furthermore, between the radio base station eNB and the mobile station UE, the SRB1 and the SRB2 are set up.

In step S1003, the radio base station eNB transmits to the mobile station UE "RRCConnectionReconfiguration (MDT MeasConfig)", which instructs to set up, by using the SRB1, the SRB3 between the radio base station eNB and the mobile station UE.

In step S1004, the mobile station UE transmits to the radio base station eNB, by using the SRB1, "RRCConnectionReconfigurationComplete".

In steps S1005 to S1007, when a condition designated by the "ReportConfig" is satisfied, the mobile station UE transmits, by using the SRB3 designated by the "ReportConfig", the "MDT MeasReport" in which the measurement result in the measurement target designated by the "MeasObject" is included.

In step S1008, the radio base station eNB transmits to the mobile station UE, by using the SRB1, "RRCConnectionReconfiguration (MDT MeasConfig)", which instructs a change in the configuration of the SRB3.

In step S1009, the mobile station UE transmits to the radio base station eNB, by using the SRB3, "RRCConnectionReconfigurationComplete".

In steps S1010 and S1011, when the condition designated by the "ReportConfig" is satisfied, the mobile station UE transmits, by using the SRB3 designated by the "ReportConfig", the "MDT MeasReport" in which the measurement result in the measurement target designated by the "MeasObject" is included.

In accordance with the mobile communication system according to the present embodiment, the mobile station UE is configured to transmit the "MDT MeasReport" by using the SRB designated by the "ReportConfig", so that it is possible to perform the MDT without wasting a radio resource in the SRB1 and the SRB2.

A first characteristic of an example is summarized in that a mobile communication method includes: a step A of transmitting to a mobile station UE, by a radio base station eNB, "MDT MeasConfig (test-use measurement control information)" including "MeasObject (measurement target information)" and "ReportConfig (a reporting condition)" to a mobile station UE; and a step B of transmitting to the radio base station eNB, by the mobile station UE, by using SRB (a signaling-use radio bearer) designated by the "ReportConfig", "MDT MeasReport (a test-use measurement report)" in which a measurement result in a measurement target designated by the "MeasObject" is included.

In the first characteristic, the SRB includes SRB1 (a radio bearer for first signaling) for transmitting/receiving RRC signaling, SRB2 (a radio bearer for second signaling) for transmitting/receiving NAS signaling, and SRB3 (a radio bearer for third signaling), and the mobile communication method may include a step of setting up, by using the SRB1, the SRB3 between the radio base station eNB and the mobile station UE.

In the first characteristic, in the step A, the radio base station eNB may transmit the "MDT MeasConfig to the mobile station UE, by using the SRB3.

A second characteristic of an example is summarized in that a mobile station UE includes: a reception unit (SRB1 function 24A/SRB3 function 24C) configured to receive "MDT MeasConfig" in which "MeasObject" and "ReportConfig" are included from a radio base station eNB; and a transmission unit (SRB1 function 24A/SRB3 function 24C) configured to transmit to the radio base station eNB, by using SRB (SRB1/SRB3) designated by the "ReportConfig", "MDT MeasReport" in which a measurement result in a measurement target designated by the "MeasObject" is included.

In the second characteristic, the SRB includes SRB1 for transmitting/receiving RRC signaling, SRB2 for transmitting/receiving NAS signaling, and SRB3, and the mobile station UE may include a set-up unit (the SRB1 function 24A) configured to set up, by using the SRB1, the SRB3 between the mobile station UE and the radio base station eNB.

A third characteristic is summarized in that a radio base station eNB includes: a transmission unit (SRB1 function 13A/SRB3 function 13C) configured to transmit "MDT MeasConfig" including "MeasObject" and "ReportConfig to a mobile station UE; and a reception unit (SRB1 function 13A/SRB3 function 13C) configured to receive from the mobile station UE, by using SRB designated by the "ReportConfig", "MDT MeasReport" in which a measurement result in a measurement target designated by the "MeasObject" is included.

In the third characteristic , the SRB includes SRB1 for transmitting/receiving RRC signaling, SRB2 for transmitting/receiving NAS signaling, and SRB3, and the radio base station eNB may include a set-up unit (the SRB1 function 13A) configured to set up, by using the SRB1, the SRB3 between the radio base station eNB and the mobile station UE.

In the third characteristic, the transmission unit (the SRB3 function 13C) may be configured to transmit the "MDT MeasConfig" to the mobile station UE, by using the SRB3.

In the first to third characteristics, the priority (QCI) of the SRB3 may be lower than the priority of the SRB1 and the priority of the SRB2.

Note that the operation of the mobile station UE or the radio base station eNB may be performed by hardware, a software module performed by a processor, or a combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the mobile station UE or the radio base station eNB. Furthermore, such a storage medium and processor may be arranged in the mobile station UE or the radio base station eNB as discrete components.

Thus, the present invention has been explained in detail by using the above-described embodiments; however, it is obvious that for persons skilled in the art, the present invention is not limited to the embodiments explained herein. The present invention can be implemented as a corrected and modified mode without departing the scope of the present invention defined by the claims. Therefore, the description of the specification is intended for explaining the example only and does not impose any limited meaning to the present invention.

### [Industrial Applicability]

As described above, according to the present invention, it is possible to provide a mobile communication method, a mobile station, and a radio base station, by which it is possible to perform MDT without wasting a radio resource in SRB1 and SRB2.

### [Reference Signs List]

eNB : Radio base station
UE : Mobile station
11 : S1-AP/X2-AP function
12 : RRC function
13A, 24A : SRB1 function
13B, 24B : SRB2 function
13C, 24C : SRB3 function
13D1,24D1 : DRB1 function
13D2,24D2 : DRB2 function
13Dn,24Dn : DRBn function
14A to 14F, 25A to 25F : PDCP/RLC function
15, 26 : Scheduler/Multiplexing function
16A to 16C, 27A to 27C : HARQ function
17, 28 : PHY function
21 : NAS function
22 : RRC function
23 ... Application function

## Claims

1. A mobile communication method comprising:
a step B (S1005-S1007) of transmitting to a radio base station, by a mobile station, by using a second signaling radio bearer, on the basis of a MDT reporting condition, an MDT measurement report including a measurement result of a measurement target,
**characterized by**
a step A (S1003) of transmitting to the mobile station, by the radio base station, measurement control information including the MDT, Minimization of Drive Tests, reporting condition, by using a first signaling radio bearer;
wherein the first signaling radio bearer used to transmit the MDT reporting condition is a signaling radio bearer having a higher priority than the second signaling radio bearer used to transmit the MDT measurement report corresponding to the MDT reporting condition.

2. A mobile station comprising:
a transmission unit (24A, 24C) configured to transmit, to a radio base station, by using a second signaling radio bearer, on the basis of a MDT reporting condition, an MDT measurement report including a measurement result of a measurement target,
**characterized by** comprising
a reception unit (24A, 24C) configured to receive, from the radio base station, measurement control information including the MDT, Minimization of Drive Tests, reporting condition, by using a first signaling radio bearer;
wherein the first signaling radio bearer used to transmit the MDT reporting condition is a signaling radio bearer having a higher priority than the second signaling radio bearer used to transmit the MDT measurement report corresponding to the MDT reporting condition.

3. A radio base station comprising:
a reception unit (13A, 13C) configured to receive, from a mobile station, by using a second signaling radio bearer, a MDT measurement report including a measurement result of a measurement target, said measurement result being transmitted on the basis of a MDT reporting condition,
**characterized by** comprising
a transmission unit (13A, 13C) configured to transmit, to the mobile station, measurement control information including the MDT, Minimization of Drive Tests, reporting condition by using a first signaling radio bearer;
wherein the first signaling radio bearer used to transmit the MDT reporting condition is a signaling radio bearer having a higher priority than the second signaling radio bearer used to transmit the MDT measurement report corresponding to the MDT reporting condition.

## Patentansprüche

1. Ein Mobilkommunikationsverfahren, umfassend:
einen Schritt B (S1005-S1007) zum Übertragen an eine Funkbasisstation, durch eine Mobilstation, durch Verwenden eines zweiten Signalisierfunkträgers, auf der Basis einer MDT-Meldebedingung, einer MDT-Messmeldung, umfassend ein Messergebnis eines Messziels,
**gekennzeichnet durch**
einen Schritt A (S1003) zum Übertragen an die Mobilstation, **durch** die Funkbasisstation, einer Messsteuerinformation, umfassend eine MDT, Minimierung von Betriebstests, Meldebedingung, **durch** Verwenden eines ersten Signalisierfunkträgers;
wobei der erste Signalisierfunkträger, welcher zum Übertragen der MDT-Meldebedingung verwendet ist, ein Signalisierfunkträger ist, welcher eine höhere Priorität als der zweite Signalisierfunkträger aufweist, welcher zum Übertragen der MDT-Messmeldung, welche zu der MDT-Meldebedingung gehört, verwendet ist.

2. Eine Mobilstation, umfassend:
eine Übertragungseinheit (24A, 24C), ausgebildet zum Übertragen, an eine Funkbasisstation, durch Verwenden eines zweiten Signalisierfunkträgers, auf der Basis einer MDT-Meldebedingung, einer MDT-Messmeldung, umfassend ein Messergebnis eines Messziels,
**dadurch gekennzeichnet, dass** diese umfasst
eine Empfangseinheit (24A, 24C), ausgebildet zum Empfangen, von der Funkbasisstation, einer Messsteuerinformation, welche die MDT, Minimierung von Betriebstests, Meldebedingung umfasst, durch Verwenden eines ersten Signalisierfunkträgers;
wobei der erste Signalisierfunkträger, welcher zum Übertragen der MDT-Meldebedingung verwendet ist, ein Signalisierfunkträger ist, welcher eine höhere Priorität als der zweite Signalisierfunkträger aufweist, welcher zum Übertragen der MDT-Messmeldung verwendet ist, welche zu der MDT-Meldebedingung gehört.

3. Eine Funkbasisstation, umfassend:
eine Empfangseinheit (13A, 13C), ausgebildet zum Empfangen, von einer Mobilstation, durch Verwenden eines zweiten Signalisierfunkträgers, eine MDT-Messmeldung, umfassend ein Messergebnis eines Messziels, wobei das Messergebnis auf der Basis einer MDT-Meldebedingung übertragen ist,
**dadurch gekennzeichnet, dass** diese umfasst
eine Übertragungseinheit (13A, 13C) ausgebildet zum Übertragen, an die Mobilstation, einer Messsteuerinformation, welche die MDT, Minimierung von Betriebstests, Meldebedingung umfasst, durch Verwenden eines ersten Signalisierfunkträgers;
wobei der erste Signalisierfunkträger, welcher zum Übertragen der MDT-Meldebedingung verwendet ist, ein Signalisierfunkträger ist, welcher eine höhere Priorität als der zweite Signalisierfunkträger aufweist, welcher zum Übertragen der MDT-Messmeldung verwendet ist, welche zu der MDT-Meldebedingung gehört.

## Revendications

1. Procédé de communication mobile comprenant :
une étape B (S1005-S1007) d'émission vers une station de base radio, par une station mobile, à l'aide d'un second support radio de signalisation, sur la base d'une condition de rapport de MDT, d'un rapport de mesure de MDT incluant un résultat de mesure d'une cible de mesure,
**caractérisé par**
une étape A (S1003) d'émission vers la station mobile, par la station de base radio, d'informations de commande de mesure incluant la condition de rapport de MDT, minimisation de tests de couverture, à l'aide d'un premier support radio de signalisation ;
dans lequel le premier support radio de signalisation utilisé pour émettre la condition de rapport de MDT est un support radio de signalisation ayant une priorité plus haute que le second support radio de signalisation utilisé pour émettre le rapport de mesure de MDT correspondant à la condition de rapport de MDT.

2. Station mobile comprenant :
une unité d'émission (24A, 24C) configurée pour émettre, vers une station de base radio, à l'aide d'un second support radio de signalisation, sur la base d'une condition de rapport de MDT, un rapport de mesure de MDT incluant un résultat de mesure d'une cible de mesure,
**caractérisée en ce qu'**elle comprend
une unité de réception (24A, 24C) configurée pour recevoir, de la station de base radio, des informations de commande de mesure incluant la condition de rapport de MDT, minimisation de tests de couverture, à l'aide d'un premier support radio de signalisation ;
dans laquelle le premier support radio de signalisation utilisé pour émettre la condition de rapport de MDT est un support radio de signalisation ayant une priorité plus haute que le second support radio de signalisation utilisé pour émettre le rapport de mesure de MDT correspondant à la condition de rapport de MDT.

3. Station de base radio comprenant :
une unité de réception (13A, 13C) configurée pour recevoir, d'une station mobile, à l'aide d'un second support radio de signalisation, un rapport de mesure de MDT incluant un résultat de mesure d'une cible de mesure, ledit résultat de mesure étant émis sur la base d'une condition de rapport de MDT,
**caractérisée en ce qu'**elle comprend
une unité d'émission (13A, 13C) configurée pour émettre, vers la station mobile, des informations de commande de mesure incluant la condition de rapport de MDT, minimisation de tests de couverture, à l'aide d'un premier support radio de signalisation ;
dans laquelle le premier support radio de signalisation utilisé pour émettre la condition de rapport de MDT est un support radio de signalisation ayant une plus grande priorité que le second support radio de signalisation utilisé pour émettre le rapport de mesure de MDT correspondant à la condition de rapport de MDT.
